# EUROPEAN PATENT APPLICATION

(11) **EP 0 530 869 A1**
(43) Date of publication of application: **10.03.1993**
(21) Application number: 92202318.9
(22) Date of filing: 28.07.1992
(51) Int. Cl.: C08L 63/02, C08L 71/02, C08L 31/04, C08L 77/00

(54) **Modified epoxy resins for the production of endless objects**

(30) Priority: 01.08.1991 EP 91201988
(71) Applicant: DSM N.V., NL-6411 TE Heerlen (NL)
(72) Inventor: Bastiaansen, Cornelis Wilhelmus Maria, NL-6224 LH Maastricht (NL)

(57) **Abstract**

Thermosettable composition suitable for the production of endless objects without the use of continuous carrier material, whereby the composition comprises an epoxy resin and a high molecular weight thermoplastic polymeric monomer.

Products made from a composition according to the application are, depending on the starting materials, suitable for applications in those areas where a good temperature resistance, a good fire resistance and/or a good corrosion and solvent resistance are required besides good mechanical properties. Examples are cable sheathing, fireproof clothing, asbestos replacement, high temperature filters, aircraft interiors, precursors for carbon fibre, food packagings (for instance for use in a microwave oven), condenser films, optical fibre and filament winding products.

## Description

The invention relates to a thermosettable composition suitable for the production of endless objects without the use of a continuous carrier material.

The term 'endless objects' as used in the present specification refers to objects that have a virtually infinite length in at least one direction, such as fibres, films, sheets and tubes. The term 'carrier material' as used herein refers to material which potentially is infinitely long, such as filaments or films, and onto which the thermosettable composition is applied and then cured. This includes foil or fiber.

A thermosettable composition from which endless objects can be made without using a continuous carrier material is described in JP-A-61262707.

This publication describes a composition on the basis of acrylates which by a special treatment can be processed to endless objects, in particular to optical fibres. To accomplish this, a set-up is built in which an acrylate mixture is pumped through a tube, the acrylates being partially cured in the tube, after which the partially cured acrylates are spun and cured further.

The drawback of a composition as described in JP-A-61262707 is that a complicated treatment is required in order to be able to process the monomers continuously, because the monomers have to be cured partially but must not reach their gel point. The range within which the monomers can be processed continuously consequently is rather narrow. This requires accurate adjustment of the process conditions and continuous controlling of the degree of curing during the transport through the tube. Consequently it is a very slow, laborious and thereby costly process, and in any case very sensitive to irregularities.

The aim of the invention is to provide a composition which does not have said drawbacks and from which therefore easily endless objects can be produced.

According to the invention this is achieved in that the composition comprises an epoxy resin and also contains a thermoplastic polymer at least part of which is dissolved in the resin and which has a molecular weight of at least 50,000 in an amount to make the composition spinnable, the amount ranging from at least 0.1 % in case the polymer has a molecular weight of 5.000.000 g/mol or more to at most 50 % in case the polymer has a molecular weight of 50.000 g/mol, the amount being lower accordingly as the molecular weight is higher, the thermoplastic polymer being chosen from the group consisting of polyethylene oxide, polyamide, styrene maleic anhydride acrylonitrile copolymers, polypropeneoxide, polyvinyl alcohol polymethylmethacrylate and polyvinyl acetate.

By 'high molecular weight' (HMW) is meant here higher than 50,000 g/mol. Preferably the molecular weight of the thermoplastic polymer is even much higher than 50,000, e.g. 250,000 and higher. If the thermoplastic polymer has a molecular weight of more than 250,000 g/mol, it is considered to have an 'ultrahigh molecular weight' (UHMW). The molecular weight is the weight-averaged molecular weight.

Because of the HMW thermoplastic polymer, the composition can for instance be processed and formed in an extruder. Moreover, the composition can be stretched, either in one or in two directions. In this way fibres or sheets for instance can be produced.

Another difference between a composition described in JP-A-61262707 and the invention is that the composition according to the invention need not be cured until after the spinning or the processing in the extruder, while the composition according to JP-A-61262707 is already partially cured before the spinning.

The spinnability will be used as criterion of the continuous processability in the manner as set out here. If a composition is spinnable, it can normally also be processed to other forms of endless objects besides fibers. The concept of spinnability is difficult to quantify, but in the present specification the definition as given by Ziabicki in Chapter 2 of 'Fundamentals of Fibre Formation', J. Wiley & Sons Ltd., London, 1976, will be used:
'A liquid is spinnable under the given conditions if a steady-state, continuous elongation of the fluid jet proceeds without a break of any kind'.

By 'the given conditions' are meant here the conditions optimized by a man skilled in the art.

In the experiments the spinnability is tested by determining whether a thread picked up with a glass rod from a quantity of test material can be elongated and wound around a small glass rod. This test is described by Ziabicki in the same reference.

The spinnability depends, among other factors, on the molecular weight of the thermoplastic polymer. The higher the molecular weight, the less material has to be added to cause the viscosity to be enhanced by a certain degree in order to make the composition spinnable.

The spinnability test as performed in the experiments which follow are intended to show that by routine experimentation it is possible to adapt the circumstances (e.g. the temperature) of most experiments in such a way that a composition is spinnable.

Preferably at least part of the thermoplastic polymer is dissolved in the epoxy resin and more preferably all of the polymer is dissolved.

In general, it will be advantageous to add the thermoplastic polymer in the form of little particles with a diameter of less then 0.5 mm, because this improves the speed of dissolution of the thermoplastic polymer in the epoxy resin. It is also possible to heat the thermoplastic polymer before it is added to the composition.

A fast dissolution speed is not necessary for a succesful application of a composition according to the invention.

The molecular weight of the thermoplastic polymer is at least 50,000. The composition preferably contains, relative to the composition as a whole, an amount of the thermoplastic polymer to make the composition spinnable, the amount ranging from at least 0.1 % in case the polymer has a molecular weight of 5.000.000 g/mol or more to at most 50 % in case the polymer has a molecular weight of 50.000 g/mol, the amount being lower accordingly as the molecular weight is higher, the thermoplastic polymer being chosen from the group consisting of polyethylene oxide, polyamide, styrene maleic anhydride acrylonitrile copolymers, polypropeneoxide, polyvinyl alcohol polymethylmethacrylate and polyvinyl acetate.

The minimum quantity of thermoplastic polymer to be added in order to obtain a continuously processable composition also depends on the type of thermoplastic polymer: in general, of thermoplastic polymers that are high viscous above their melting point, a lower quantity will be needed then of thermoplastic polymers that are low viscous above their melting point. For instance, in general a higher quantity of a branched thermoplastic polymer than of a linear thermoplastic polymer will be required. In general the desired properties of the composition will be determined by the average chain length of the thermoplastic polymeric polymer dissolved in it. This means for instance that of polyethylene oxide (PEO) a lower weight percentage with a certain molecular weight will suffice than of polyvinyl acetate (PVA), because PEO is less heavy than PVA per unit of chain length.

It is possible to add higher percentages of thermoplastic polymer. However, the properties of the product may be adversely affected by the thermoplastic polymer. Therefore it is usually desirable to keep the quantity of thermoplastic polymer as small as possible.

The amount of polymer needed to obtain a spinnable composition also depends on the molecular weight of the polymer, the amount required being lower accordingly as the molecular weight is higher. Preferably the molecular weight of the polymer is at least 1,000,000 and the amount present in the composition ranges from at least 0.1 % in case the polymer has a molecular weight of 5,000,000 g/mol or more to less than 2% in case the polymer has a molecular weight of 1,000,000 g/mol. The invention thus also relates to a thermosettable composition comprising an epoxy resin and suitable for the production of endless objects without the use of continuous carrier material wherein the composition also contains a thermoplastic polymer at least part of which is dissolved in the resin and which has a molecular weight of at least 1,000,000 in an amount to make the composition spinnable, the amount ranging from at least 0.1 % in case the polymer has a molecular weight of 5,000,000 g/mol or more to less than 2% in case the polymer has a molecular weight of 1,000,000 g/mol, the amount being lower accordingly as the molecular weight is higher.

Mixing in of a thermoplastic polymer in a liquid before polymerization in order to increase the viscosity is described in GB-A-1,057,434, which does not refer to epoxy resin however. The objective of that patent specification is to provide a solution to the problem of a polymer not dissolving in its own monomers. There is no suggestion in the patent specification that it would be advantageously to add thermoplastic polymers to a thermosetting system on the basis of an epoxy resin.

GB-A-1.057.434 does describe the possibility of adding to the Newtonian liquid of mainly acrylonitrile a minor quantity of monomer which can bring about a certain degree of crosslinking, but only a low crosslink density is achieved with this. A product with such a low crosslink density is generally not regarded as a thermoset product. A product obtained by the process according to GB-A-1.057.434 consequently will not possess the excellent properties of a product according to the invention.

A manner of making endless objects from epoxy resin is to coat carrier material such as continuous or semi-continuous fibres with epoxy resin. Stretching of objects made of carrier fibre is practically impossible. The material is then processed by coextrusion or pultrusion.

The thermoplastic polymers can be chosen from all thermoplastic polymers that can be produced with a high molecular weight and which are compatible with (i.e. at least partially soluble in) the unsaturated polyester to be used. Preferred are polyethylene oxide, polypropylene oxide, styrene maleic anhydride acrylonitrile copolymer, polyacrylate, poly(m)ethyl(meth)acrylate, polyarylamide, polyacrylamide or polyvinyl acetate. Most preference is given to polymers that can be obtained with extremely high molecular weights, especially polyethylene oxide or polyvinyl acetate.

Epoxy resins are described e.g. in a report by the Process Economics Program of Stanford Research Institute, Menlo Park, California, 'Epoxy Resins', February 1984, hereby incorporated by reference. Further it will be referred to as SRI-report.

Epoxy resins are further described in Encylopedia of Polymer Science and Engineering, Volume 6, John Wiley & Sons, New York, second edition, 1986, pp. 322-382, hereby incorporated by reference.

Epoxy resins are further described in Kunststoff Handbuch, Volume 10, Duroplaste, by W. Woebcken, Carl Hauser Verlag, München, 1988, pp. 103-120, hereby incorporated by reference.

The thermoplastic polymer should at least partially dissolve in the epoxy resin. Depending on the choice of thermoplastic polymer and epoxy resin and the rate of curing, a molecular blend is obtained or a crystallisation or a phase separation takes place upon curing. The latter may give rise to favourable properties, such as improved toughness of the final product. Low molecular thermoplastic polymers may further be added to the composition to improve certain properties, such as the impact resistance.

Additives may further be taken up in the composition, such as inhibitors, promoters, accelerators, flexibilizers, lubricants, release agents, antioxidants, pigments, surfactants, crosslinkers, fillers or fibre reinforcement agents.

Initiation of the curing may be effected in all ways by which epoxy resins can be cured, such as thermally and with UV light. Possible initiators and catalysts are described in said SRI-report, hereby incorporated by reference.

Preferably, the curing takes place under the influence of UV light. The point in time at which curing commences can be chosen freely then: during or after the shaping process or during the cooling stage. An additional advantage is that when UV curing is applied higher temperatures can be used during the suspending, dissolving and extruding or spinning, without causing the curing to start already.

A possible mode of operation for a process for the manufacture of products is the following:
The thermoplastic polymer is suspended and dissolved in the epoxy resin. This may require heating of the composition to a suitable temperature, for instance between 50 and 200°C. Preferably the composition is not heated to a temperature at which one or more of the components start to boil. The mixture is then extruded or spun and then partially or fully cured.

A possible way of combining thermoplastic polymer and epoxy resin is mixing an amount of thermoplastic polymer particles into the low viscous epoxy resins at a low temperature, thereby forming a low viscous suspension. The low viscous suspension can easily be pumped into e.g. an extruder. In the extruder the suspension is heated up and the thermoplastic polymer dissolves, thereby increasing the viscosity. From this extruder filaments are extruded and cured afterwards.

Additional steps in this mode of operation can be mixing in of reinforcements such as reinforcing fibres into the composition and stretching of the extruded or spun intermediate.

With reinforcing fibers is meant, according to the invention, fibers that have properties that are such that they improve the mechanical properties of the product in which those fibers are incorporated. Reinforcing fibers will normally not melt or otherwise loose their mechanical strength under the processing conditions. Examples are glass fibers and carbonfibers, but any other fiber can be used principally.

The viscoelasticity of the composition can be adjusted to the chosen method of processing.
If spinning in a downward direction is opted for, a lower weight percentage or a lower molecular weight thermoplastic polymer will suffice than in the case of for instance film blowing in an upward direction.

If it is intended to produce thin objects, it is recommendable to stretch the composition, before the curing. If fibrous fillers have been added, which are required to be in oriented condition in the product, it is also recommendable to stretch the composition prior to curing. If anisotropy is wanted in the final product, it is recommendable to stretch after or during the curing. After curing the product consists of a densly crosslinked threedimensional network, but can be stretched a little bit.

Preferably, the composition is stretched uniaxially to a fiber with a thickness of less then 1 mm or biaxially to a sheet with a thickness of less then 1 mm.

If the curing of the epoxy resins is effected with supply of heat, it can be advantageous to perform the curing in a bath filled with a liquid that is inert during the curing reaction and has a specific gravity which is virtually equal to that of the composition.

It is possible to have the reaction take place under the influence of a catalyst, which is in the inert liquid and from there diffuses into the composition.

It is possible to postcure the products. This could render products with even better properties and especially with better high temperature properties.

Products made from a composition according to the invention are, depending on the starting materials, suitable for applications in those areas where a good temperature resistance, a good flame resistance and/or a good corrosion and solvent resistance are required besides good mechanical properties. Examples are cable sheathing, fireproof clothing, asbestos replacement, high temperature filters, high temperature films for flexible printed circuits, aircraft interiors, precursors for carbon fibre, food packagings (for instance for use in a microwave oven), condensor films, optical fibre and filament winding products. Here it is a significant advantage that the epoxy resin compositions according to the invention need not be processed at a high temperature, in contrast to thermoplastic polymers with a high intrinsic temperature resistance. The invention is notably advantageous where sheets, films, fibres, tubes or other endless objects are required with one or more of the above-mentioned properties. The products, further, can be produced as bundles of thin filaments or as single, thicker monofilaments. The products according to the invention can be reduced to products of smaller length by cutting, sawing, breaking or similar methods.

The invention will be illustrated by means of the following examples and comparative experiments, without being restricted thereto.

Tensile tests on fibres were performed at room temperature on a Zwick tensile tester with fibre clamps. The initial length of the fibre was 50 cm; the crosshead speed was 5 cm/min. From the measured stress/strain curve the (Young's) E-modulus, the tensile strength and the elongation at break were determined.
As molecular weight the value according to the manufacturer was used.
LOI measurements were performed according to ASTM D2863. DMA measurements were performed according to M.E. Brown, Introduction to Thermal Analysis, chapter 8, pp. 72 ff. TGA and DSC measurements were performed according to F.W. Billmeyer, Textbook of Polymer Science, John Wiley and Sons, ISBN 0 441 072966.

### Examples I-II

### Determination of the percentages of thermoplastic polymer required for spinnability

Polyethylene oxide (PEO) was obtained from Aldrich Chemie, W. Germany, with molecular weights of 200,000, 900.000 and 5,000,000 according to the manufacturer.

Three PEO's of different molecular weight were suspended at room temperature in an epoxy resin (Epikote RXE-11 from Shell Resins) with varying concentrations. The different molecular weights and concentrations are listed in table 1. The PEO was dissolved in the resin in a Brabender kneader at a temperature of 120°C.

The solution was transferred to dishes, which were subsequently heated to two different temperatures: 30°C in example I and 60°C in example II.

With a glass rod it was attempted to pick up a thread of material from each dish and then to wind the thread around a small glass rod positioned horizontally over the dish. The spindle was in a slow rotating motion. By 'moderately spinnable' in the following tables is meant that only after several attempts and with very careful action was it possible to pick up such a thread from the solution, wind it around the spindle and continuously withdraw a thread.

**Table 1**

| Spinnability at 30°C and 60°C | | | | |
|---|---|---|---|---|
| (II) 60°C | Mol.weight [g/mole] | Concentration of thermoplastic polymer | Spinnability | |
| | | | [% w/w] | (I)30° |
| a | 2x10⁵ | 1 | - | -- |
| b | 2x10⁵ | 5 | ± | - |
| c | 2x10⁵ | 10 | + | - |
| d | 2x10⁵ | 20 | ++ | + |
| e | 9x10⁵ | 0.1 | ± | -- |
| f | 9x10⁵ | 1.0 | + | - |
| g | 9x10⁵ | 2.5 | + | - |
| h | 9x10⁵ | 5.0 | ++ | + |
| i | 9x10⁵ | 10.0 | ++ | ++ |
| j | 5x10⁶ | 0.1 | ++ | + |
| k | 5x10⁶ | 0.2 | ++ | + |
| l | 5x10⁶ | 0.5 | ++ | ++ |
| m | 5x10⁶ | 1.0 | ++ | ++ |

The concentration of the thermoplastic polymer is given as weight percentage relative to the total composition. The spinnability was measured according to the test method as described above; -- means very poorly spinnable, - means poorly spinnable, ± means moderately spinnable, + means well spinnable and ++ means very well spinnable.

The table shows that of thermoplastic polymer with a higher molecular weight a lower percentage is required to make the solution spinnable than of thermoplastic polymer with a lower molecular weight.

Comparing the two temperatures shows that at higher processing temperatures relatively more has to be added to make the solution spinnable.

The invention relates by preference to a composition with such a high percentage of thermoplastic polymer of a certain molecular weight that at the composition's processing temperature the composition is spinnable. So, with a desired processing temperature of 30°C the composition contains at least 1% w/w of a thermoplastic polymer with a molecular weight of 9x10⁵.

With a desired processing temperature of 60°C the composition preferably contains 5% w/w of the thermoplastic polymer with a molecular weight of 9x10⁵.

However, the quantities stated above apply here to PEO with the given epoxy resin. If other epoxy resin containing compositions and/or other HMW polymers are used, the figures will probably be different. The above guidelines provide a clear indication how the invention can be applied in analogous cases.

### Comparative experiment A

The procedure of examples I to II was repeated, but without mixing in PEO in the epoxy resin. Again it was examined whether the solution could be spun to a fibre at a temperature of 30 or 60°C. This was not the case.

## Claims

1. Thermosettable composition suitable for the production of endless objects without the use of continuous carrier material, characterized in that the composition comprises an epoxy resin and also contains a thermoplastic polymer at least part of which is dissolved in the resin and which has a molecular weight of at least 50,000 in an amount to make the composition spinnable, the amount ranging from at least 0.1 % in case the polymer has a molecular weight of 5.000.000 g/mol or more to at most 50 % in case the polymer has a molecular weight of 50.000 g/mol, the amount being lower accordingly as the molecular weight is higher, the thermoplastic polymer being chosen from the group consisting of polyethylene oxide, polyamide, styrene maleic anhydride acrylonitrile copolymers, polypropeneoxide, polyvinyl alcohol polymethylmethacrylate and polyvinyl acetate.

2. Thermosettable composition comprising an epoxy resin and suitable for the production of endless objects without the use of continuous carrier material wherein the composition also contains a thermoplastic polymer at least part of which is dissolved in the resin and which has a molecular weight of at least 1,000,000 in an amount to make the composition spinnable, the amount ranging from at least 0.1 % in case the polymer has a molecular weight of 5,000,000 g/mol or more to less than 2% in case the polymer has a molecular weight of 1,000,000 g/mol, the amount being lower accordingly as the molecular weight is higher.

3. Composition according to claim 2, characterized in that the thermoplast is chosen from the group comprising polyethylene oxide, polyamide, styrene maleic anhydride acrylonitrile copolymers, polypropeneoxide, polyvinyl alcohol polymethylmethacrylate and polyvinyl acetate.

4. Composition according to any one of the claims 1-3, characterized in that the composition contains fibrous reinforcing material.

5. Process for making of an endless object without the use of continuous carrier material, characterized in that a composition according to any one of the claims 1-3 is heated to a suitable temperature, the thermoplastic polymer is at least partially dissolved, the composition is extruded or spun and subsequently at least partially cured.

6. Process according to claim 5, characterized in that the complete or partial curing of the epoxy resin takes place in a bath filled with a liquid which is inert during the curing reaction and has a specific gravity which is virtually equal to that of the composition.

7. Process according to claim 6, characterized in that the inert liquid contains a catalyst which is suitable for the curing of epoxy resins and can diffuse from the liquid into the composition.

8. Process according to claim 5, characterized in that the composition contains a UV initiator and is cured by exposing the composition to UV radiation.

9. Process according to any one of the claims 5-8, characterized in that the composition is stretched uniaxially or biaxially before, during or after the at least partial curing of the composition.

10. Process according to claim 9, characterized in that the composition is uniaxially stretched to a fibre with a thickness of less than 1 mm.

11. Process according to claim 9, characterized in that the composition is stretched biaxially to a sheet with a thickness of less than 1 mm.

12. Process according to any one of the claims 5-11, characterized in that the composition is postcured.

13. Endless object obtained by at least partial curing of a composition according to any one of the claims 1-3 or by application of the process according to any one of the claims 5-12.
